# EUROPÄISCHE PATENTSCHRIFT

(11) **EP 3 788 669 B1**
(45) Veröffentlichungstag und Bekanntmachung des Hinweises auf die Patenterteilung: **02.03.2022**
(21) Anmeldenummer: 19721569.2
(22) Anmeldetag: 24.04.2019
(51) Int. Cl.: F28D 21/00, F28D 9/00, H01M 8/04029, H01M 8/04007, H01M 8/04119

(54) **BEFEUCHTER SOWIE KRAFTFAHRZEUG**
HUMIDIFIER AND VEHICLE
HUMIDIFICATEUR ET VÉHICULE

(30) Priorität: 26.10.2018 DE 102018218317
(43) Veröffentlichungstag der Anmeldung: 10.03.2021
(73) Patentinhaber: Audi AG, 85045 Ingolstadt (DE); VOLKSWAGEN AG, 38440 Wolfsburg (DE)
(72) Erfinder: LUCAS, Christian, 38108 Braunschweig (DE)
(74) Vertreter: Hentrich Patentanwälte PartG mbB
(86) Internationale Anmeldenummer: PCT/EP2019/060408
(87) Internationale Veröffentlichungsnummer: WO 2020/083533

(56) Entgegenhaltungen:
- DE-A1-102012 012 255
- DE-A1-102016 200 410
- US-A1- 2006 068 250

## Beschreibung

Die Erfindung betrifft einen Befeuchter für eine Brennstoffzellenvorrichtung, mit einer Mehrzahl von Flussfeldrahmen, zwischen denen jeweils eine Befeuchtermembran angeordnet ist. Die Erfindung betrifft weiterhin ein Kraftfahrzeug.

Befeuchter im Allgemeinen werden eingesetzt, um bei zwei gasförmigen Medien mit einem unterschiedlichen Feuchtegehalt eine Übertragung der Feuchte auf das trockenere Medium bewirken zu können. Derartige Gas/GasBefeuchter finden insbesondere Anwendung in Brennstoffzellenvorrichtungen, bei denen im Kathodenkreislauf zur Versorgung der Kathodenräume des Brennstoffzellenstapels Luft mit dem darin enthaltenen Sauerstoff verdichtet wird, so dass relativ warme und trockene komprimierte Luft vorliegt, deren Feuchte für die Verwendung in den Brennstoffzellenstapeln für die Membranelektrodeneinheit nicht ausreicht. Die durch den Verdichter bereitgestellte trockene Luft für den Brennstoffzellenstapel wird befeuchtet, indem sie an der für Wasserdampf durchlässigen Membran vorbeigeführt wird, deren andere Seite mit der feuchten Abluft aus dem Brennstoffzellenstapel bestrichen wird. Für die Konditionierung der den Kathodenräumen des Brennstoffzellenstapels zuzuführenden Luft ist auch deren Temperierung erforderlich, wozu in der Regel nach dem Verdichter positionierte Ladeluftkühler eingesetzt werden. Der Befeuchter und der Ladeluftkühler sind große Komponenten, die zu einer starken Vergrößerung des erforderlichen Bauraums für eine Brennstoffzellenvorrichtung beitragen und die Effizienz der Brennstoffzellenvorrichtung einschränken, weil hohe thermische Verluste vorliegen.

In der US 2015/0004504 A1 ist eine integrierte Gasmanagementvorrichtung für eine Brennstoffzelle offenbart, die einen Befeuchter sowie einen Wärmetauscher aufweist, der an einem ersten Ende des Befeuchterkerns angeordnet ist.

Die Druckschrift US 2006/068250 A1 offenbart ein Brennstoffzellensystem, bei dem die Komponenten eines Brennstoffzellenstapels, eines Befeuchters und eines Kühlers innerhalb einer Stapelanordnung funktionell integriert sind. Die Strömungsplatten des Befeuchters und des Kühlers weisen zwar die gleiche Größe auf, sind aber unterschiedlich gebildet.

Die DE 10 2016 200 410 A1 beschreibt einen Befeuchter für eine Brennstoffzelle, der aus einer ersten und einer zweiten Strömungsplatte aufgebaut ist. Eine der somit unterschiedlich gebildeten Strömungsplatten weist einen Kühlkanal auf, so dass in den Befeuchter funktionell ein Ladeluftkühler integriert ist.

Die DE 10 2012 012 255 A1 offenbart eine Vorrichtung, bei der in einem Gehäuse ein Brennstoffzellenstapel, ein Wärmetauscher/Ladeluftkühler und ein Befeuchter in gestapelter Form angeordnet sind, wobei die Strömungsplatten unterschiedlich gebildet sind.

Der Erfindung liegt die Aufgabe zugrunde, einen Befeuchter der eingangs genannten Art so zu modifizieren, dass der Komplexitätsgrad eines Brennstoffzellensystems reduziert werden kann. Aufgabe ist es weiterhin, ein verbessertes Kraftfahrzeug bereitzustellen.

Diese Aufgabe wird durch einen Befeuchter mit den Merkmalen des Anspruches 1 und durch ein Kraftfahrzeug mit den Merkmalen des Anspruches 9 gelöst. Vorteilhafte Ausgestaltungen mit zweckmäßigen Weiterbildungen der Erfindung sind in den abhängigen Ansprüchen angegeben.

Der erfindungsgemäße Befeuchter zeichnet sich dadurch aus, dass eine Mehrzahl von zu den Flussfeldrahmen identisch gebildeten Kühl-Flussfeldrahmen, zwischen denen jeweils eine Trennplatte angeordnet ist, einen integrierten Ladeluftkühler bilden. Zum Einen wird dadurch erreicht, dass der Bauraumbedarf deutlich verringert werden kann, da der Ladeluftkühler in den Befeuchter integriert, also mit diesem zusammengefasst ist. Des Weiteren ist neben der Erhöhung des Integrationsgrades auch die Anzahl der Gleichteile in dem Gesamtsystem Befeuchter plus Ladeluftkühler erhöht, da die als Kühl-Flussfeldrahmen des Ladeluftkühlers identisch zu den Flussfeldrahmen des Befeuchters gebildet sind, also eine Produktion identischer Teile ermöglicht ist, die erst nachfolgend auf den Befeuchter und den Ladeluftkühler verteilt werden und dann die Zuordnung und Benennung als Flussfeldrahmen bzw. Kühl-Flussfeldrahmen erfolgt.

Darüber hinaus zeichnet sich der erfindungsgemäße Befeuchter auch dadurch aus, dass eine Kopplungsplatte zwischen den in einem Stapel angeordneten Flussfeldrahmen und den in einem Stapel angeordneten Kühl-Flussfeldrahmen vorgesehen ist. Die zwischen dem Flussfeldrahmen und dem Kühl-Flussfeldrahmen vorgesehene Kopplungsplatte ermöglicht eine Optimierung der Strömungsführung in den jeweiligen Bauteilen, so dass zwar ein identischer Aufbau der Flussfeldrahmen und der Kühl-Flussfeldrahmen vorliegt, dass diese aber, ihrem Zwecke entsprechend, unterschiedlich durchströmt werden können.

Dabei bietet es sich dann an, dass die Kopplungsplatte flussfeldfrei mit dem zu den Flussfeldrahmen identischen Querschnitt ausgebildet ist und eine durchgehende, die Flussfeldrahmen und die Kühl-Flussfeldrahmen für die trockene Luft koppelnde Trockenluftleitung aufweist. Der zu den Flussfeldrahmen und Kühl-Flussfeldrahmen identische Querschnitt stellt sicher, dass die Kopplungsplatte in den durch diese gebildeten Stapel integriert werden kann, wobei es nicht erforderlich ist, neben der Einhaltung des Querschnitts auch die Dicke der Flussfeldrahmen bei der Kopplungsplatte zu reproduzieren; die Kopplungsplatte kann eine von den Flussfeldrahmen abweichende, insbesondere erhöhte Dicke aufweisen. Dies erleichtert dann insbesondere, dass die Kopplungsplatte einen seitlichen Kühlmittelanschluss mit einer Kühlmittelleitung zur Durchleitung des Kühlmittels zu den Kühl-Flussfeldrahmen ausbilden kann, und dass die Kopplungsplatte einen seitlichen Luftaustritt für den Austritt der feuchten Luft nach dem Durchleiten in einer Luftleitung von den Flussfeldrahmen aufweist.

Für die Funktionsweise des Befeuchters ist es erforderlich, dass auf beiden Seiten jeder Befeuchtermembran eine Dichtung angeordnet ist. Es sind auch identisch gebildete Dichtungen auf beiden Seiten jeder Trennplatte angeordnet, so dass dadurch erneut eine Erhöhung der Anzahl der Gleichteile vorliegt und bei der Produktion und bei der Montage vorteilhafte Skalierungseffekte genutzt werden können.

Es ist weiterhin vorgesehen, dass die Trennplatte aus einem Metall oder einer Metalllegierung gebildet ist, um so eine verlässliche Separierung der Strömungen in den Kühl-Flussfeldrahmen mit einem guten Wärmeaustausch zu gewährleisten.

Es ist auch vorgesehen, dass zwischen den Trennplatten in den Kühl-Flussfeldrahmen für eine verbesserte Wärmeübertragung Elemente zur Oberflächenvergrößerung angeordnet sind, die ausgewählt sind aus einer Gruppe, die Umlenkbleche und poröse Vliese umfasst.

Vorgesehen ist weiterhin, dass in den Flussfeldrahmen und den Kühl-Flussfeldrahmen für das Flussfeld Kanäle geformt oder poröse Bereiche bereitgestellt sind.

Bei diesem Befeuchter mit integriertem Ladeluftkühler liegt damit ein modularer Aufbau mit einer großen Anzahl von Gleichteilen vor und es besteht insbesondere die einfache Möglichkeit, zur Anpassung an das geforderte Leistungsvermögen des Befeuchters und/oder Ladeluftkühlers eine unterschiedliche Anzahl der Module einzusetzen, wobei die Anzahl der verwendeten Flussfeldrahmen unabhängig von der Anzahl der Kühl-Flussfeldrahmen den Bedürfnissen entsprechend gewählt werden kann.

Damit besteht auch die Möglichkeit, ein Kraftfahrzeug mit einer einen Befeuchter der vorstehend genannten Art gebildeten Brennstoffzellenvorrichtung zu verbessern, weil der Bauraumbedarf für den Befeuchter mit integriertem Ladeluftkühler verringert ist und damit Bauraum in dem Kraftfahrzeug zur weiteren Verwendung freigegeben wird, und des Weiteren die Kosten für das Kraftfahrzeug sinken während dessen Effizienz steigt.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Figur 1: eine Draufsicht auf einen Kanäle aufweisenden Flussfeldrahmen,
- Figur 2: eine schematische Darstellung einer Seitenansicht zweier zwischen Befeuchtermembranen angeordneten Flussfeldrahmen, wobei der gestrichelt dargestellte Flussfeldrahmen die feuchte (Ab-)Luft führt, und wobei der andere unstrichliert dargestellte Flussfeldrahmen die trockene, zu befeuchtende (Zu-)Luft führt,
- Figur 3: der zur Erläuterung der Erfindung erforderliche Teil einer Brennstoffzellenvorrichtung, nämlich der Brennstoffzellenstapel mit den kathodenseitigen Nebenaggregaten,
- Figur 4: eine der Figur 1 entsprechende Darstellung eines Kühl-Flussfeldrahmens, wobei der gestrichelt dargestellte Kühl-Flussfeldrahmen die zu kühlende, trockene (Zu-)Luft führt, und wobei der andere unstrichliert dargestellte Kühl-Flussfeldrahmen das Kühlmittel führt,
- Figur 5: eine der Figur 2 entsprechende Darstellung zweier zwischen Trennplatten aufgenommenen Kühl-Flussfeldrahmen,
- Figur 6: eine schematische Darstellung der Strömung in einem Befeuchter mit integriertem Ladeluftkühler, wobei zwischen dem Befeuchter und dem Ladeluftkühler eine Kopplungsplatte angeordnet ist,
- Figur 7: eine schematische Darstellung der Leitungen und Strömungsverhältnisse in einem Ladeluftkühler, entsprechend dem linken Teil der Figur 6,
- Figur 8: eine schematische Darstellung der Leitungen und Strömungsverhältnisse in einer Kopplungsplatte, entsprechend dem mittleren Teil in Figur 6,
- Figur 9: eine schematische Darstellung der Leitungen und Strömungsverhältnisse in einem Befeuchter, entsprechend dem rechten Teil in Figur 6,
- Figur 10: eine der Figur 1 entsprechende Darstellung eines Flussfeldrahmens bzw. eines Kühl-Flussfeldrahmens mit einem porösen Flussfeld,
- Figur 11: eine schematische Darstellung eines zwischen zwei Trennplatten und zwei Kühl-Flussfeldrahmen aufgenommenen Vlieses vor dem Zusammenbau, und
- Figur 12: eine der Figur 11 entsprechende Darstellung nach dem Zusammenbau.

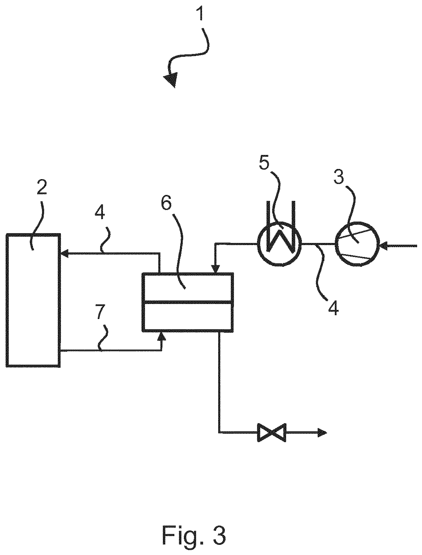

In der Figur 3 ist von einer aus dem Stand der Technik bekannten Brennstoffzellenvorrichtung 1 der zur Erläuterung der Erfindung erforderliche Teil gezeigt, wobei die Brennstoffzellenvorrichtung 1 eine Einrichtung zur Feuchteregulierung einer Mehrzahl von in einem Brennstoffzellenstapel 2 zusammengefassten Brennstoffzellen zeigt.

Brennstoffzellen dienen dazu, in einer chemischen Reaktion zwischen einem Brennstoff, in der Regel Wasserstoff, und einem sauerstoffhaltiges Oxidationsmittel, in der Regel Luft, elektrische Energie bereitzustellen. Sofern der Leistungsbedarf dabei die durch die Brennstoffzelle bereitgestellte Leistung übersteigt, besteht die Möglichkeit, mehrere Brennstoffzellen in Serie zu dem Brennstoffzellenstapel 2 zusammenzufassen, wobei sich allerdings der Bedarf an den an der chemischen Reaktion beteiligten Reaktanten erhöht und kathodenseitig die Notwendigkeit besteht, das Kathodengas in einem Verdichter 3 zu komprimieren. Durch diese Kompression liegt in der Kathodenzufuhrleitung 4 nach dem Verdichten stark erwärmtes, trockenes Kathodengas vor, das zur unmittelbaren Verwendung in dem Brennstoffzellenstapel 2 nicht geeignet ist, da bei der in der Brennstoffzelle gegebenen Protonenaustauschmembran ausreichend Feuchtigkeit erforderlich ist. In der Kathodenzufuhrleitung 4 ist daher stromab des Verdichters 3 ein Ladeluftkühler 5 und wiederum stromab von diesem ein Befeuchter 6 angeordnet, in dem das Kathodengas befeuchtet wird, indem das bei der chemischen Reaktion anfallende Produktwasser über eine Kathodenabgasleitung 7 dem Befeuchter 6 zugeführt wird.

Im Gegensatz zu der in Figur 3 gezeigten, aus dem Stand der Technik bekannten getrennten Bereitstellung eines Befeuchters 6 und eines Ladeluftkühlers 5 ist bei der Erfindung ein Befeuchter 6 mit integriertem Ladeluftkühler 5 gegeben, dessen Aufbau nachfolgend genauer erläutert wird.

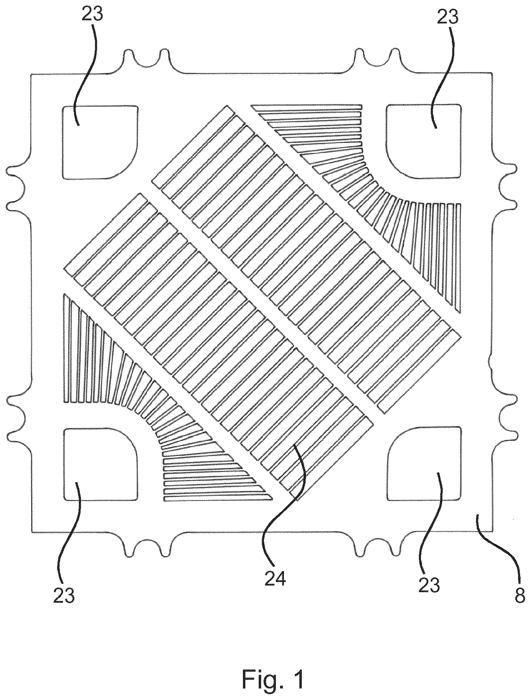

Der Befeuchter 6 umfasst eine Mehrzahl von Flussfeldrahmen 8, deren lediglich beispielhafter Aufbau aus der Figur 1 ersichtlich ist, wobei zwischen den Flussfeldrahmen 8 jeweils eine Befeuchtermembran 9 angeordnet ist. Für den Befeuchter 6 liegt ein modularer Aufbau vor, so dass eine unterschiedliche Anzahl von Flussfeldrahmen 8 Verwendung finden kann, für die geeignete Auslegung der Leistungsfähigkeit des Befeuchters 6.

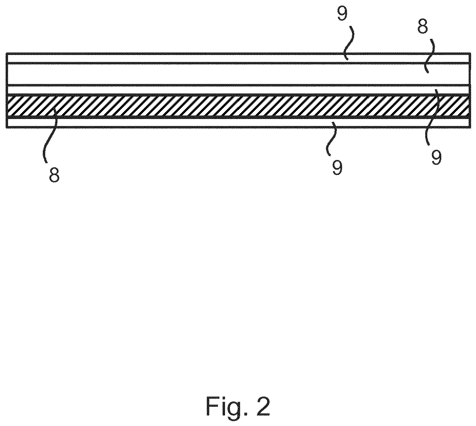

Figur 2 zeigt schematisch zwei benachbarte Flussfeldrahmen 8 mit den zugeordneten Befeuchtermembranen 9; es wird darauf hingewiesen, dass die Flussfeldrahmen 8 in dem derart gebildeten Stapel nicht die gleiche Orientierung aufweisen müssen, sondern bei jeweils paarweise zusammengefassten Flussfeldrahmen 8 der Eine gegenüber dem Anderen um 90 Grad um die auf der Fläche des Flussfeldrahmens 8 senkrecht stehende Achse verdreht sein kann.

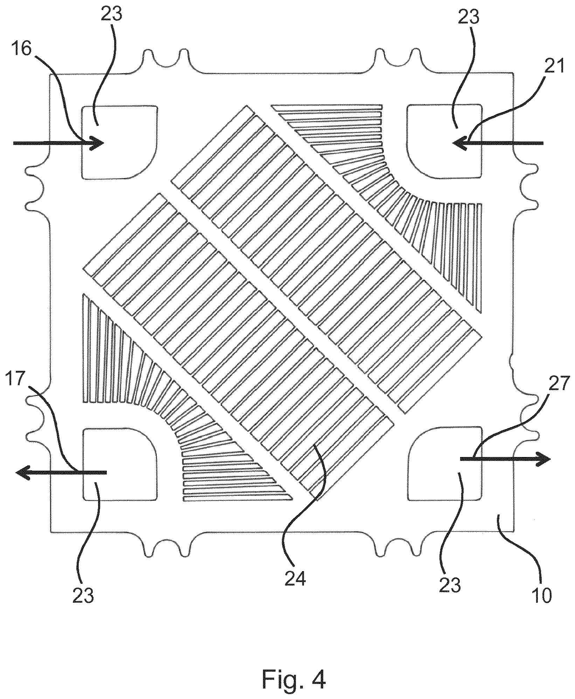

Figur 4 zeigt einen Kühl-Flussfeldrahmen 10, wie dieser in dem Ladeluftkühler 5 Verwendung findet. Es wird darauf hingewiesen, dass der Kühl-Flussfeldrahmen 10 gegenüber dem aus der Figur 1 gezeigten Flussfeldrahmen 8 identisch gebildet ist und ein Gleichteil darstellt, das dem zu dem Flussfeldrahmen 8 identischen Produktionsprozess entstammt und die unterschiedliche Namensgebung lediglich von dem unterschiedlichen Verwendungszweck in dem Befeuchter 6 einerseits und dem Ladeluftkühler 5 andererseits herrührt. Figur 4 zeigt dabei anschaulich auch die gegenüber Figur 1 um 90 Grad verdrehte Positionierung; auch bei dem Kühl-Flussfeldrahmen 10 kann die alternierende Orientierung gegeben sein.

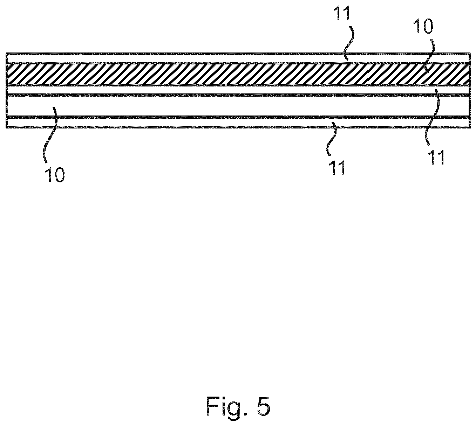

Figur 5 zeigt zwei Kühl-Flussfeldrahmen 10, zwischen denen eine Trennplatte 11 angeordnet ist, wobei beispielsweise in dem durch den unteren Kühl-Flussfeldrahmen 10 gebildeten Flussfeld trockene Luft strömt und in dem oberen das Kühlmittel. Auch bezüglich des Ladeluftkühlers 5 liegt ein modularer Aufbau vor, und es besteht die Möglichkeit, eine durch die erwünschte Leistungsfähigkeit des Ladeluftkühlers 5 vorgegebene Anzahl von Kühl-Flussfeldrahmen 10 mit zugeordneten Trennplatten 11 in einem Stapel einzusetzen.

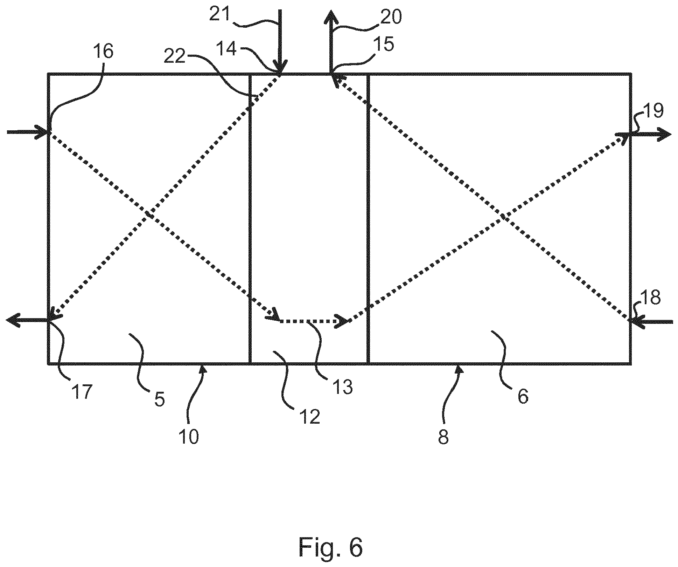

Figur 6 erläutert schematisch die Strömungsverhältnisse in dem Befeuchter 6 mit integrierten Ladeluftkühler 5, wobei zwischen dem den Ladeluftkühler 5 bildenden Block und dem den Befeuchter 6 bildenden Block eine Kopplungsplatte 12 angeordnet ist, die selber flussfeldfrei mit dem zu den Flussfeldrahmen 8 identischen Querschnitt und einem durchgehenden, die Flussfeldrahmen 8 und die Kühl-Flussfeldrahmen 10 für die trockene Luft koppelnder Trockenluftleitung 13 ausgebildet ist. Die Kopplungsplatte 12 weist des Weiteren einen seitlichen Kühlmittelanschluss 14 mit einer Kühlmittelleitung 22 zur Durchleitung des Kühlmittels zu den Kühl-Flussfeldrahmen 10 auf sowie einen seitlichen Luftaustritt 15 für den Austritt der feuchten Luft nach dem Durchleiten in einer Luftleitung von den Flussfeldrahmen 8.

Die Strömungsverhältnisse in dem Befeuchter 6 mit integriertem Ladeluftkühler 5 gemäß Figur 6 sind dabei in einer gegen den Uhrzeigersinn verlaufenden, an der oberen linken Ecke beginnenden Aufzählung erläutert: Der Eintritt von trockener Luft 16 in den Ladeluftkühler 5, die entsprechend dem Pfeil zur Kopplungsplatte 12 und durch diese hindurch in den Befeuchter 6 geleitet wird; Austritt des Kühlmittels 17; in der unteren rechten Ecke Eintritt der feuchten Luft 18 in den Befeuchter 6, die den Befeuchter 6 in Richtung der Kopplungsplatte 12 verlässt und von dort durch den seitlichen Luftaustritt 15 austritt; oben rechts der Austritt befeuchteter Luft 19, nachdem diese den Ladeluftkühler 5, die Kopplungsplatte 12 und den Befeuchter 6 durchquert hat; Austritt der feuchten (Ab-)Luft 20 sowie schließlich der Eintritt des Kühlmittels 21 in die Kopplungsplatte 12 zur Weiterleitung in einer Kühlmittelleitung 22 zu dem Ladeluftkühler 5.

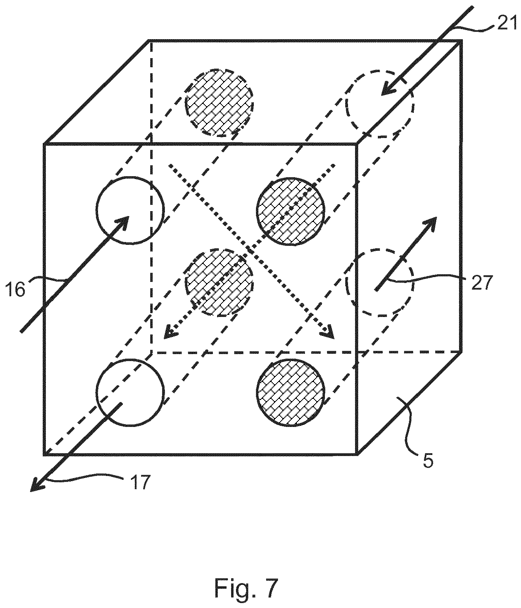

Die Strömungsverhältnisse in dem Ladeluftkühler 5 sind auch schematisch in dem in Figur 7 dargestellten Würfel erläutert, wobei die gezeigten Kanäle jeweils einseitig offen und an dem gegenüberliegenden Ende verschlossen sind. Bei 16 erfolgt der Eintritt der trockenen Luft, die durch den Ladeluftkühler 5 in einer Kreuzströmung zu dem Austritt bei 27 geführt wird. Bei 21 liegt der Eintritt des Kühlmittels vor, das bei 17 den Ladeluftkühler 5 wieder verlässt.

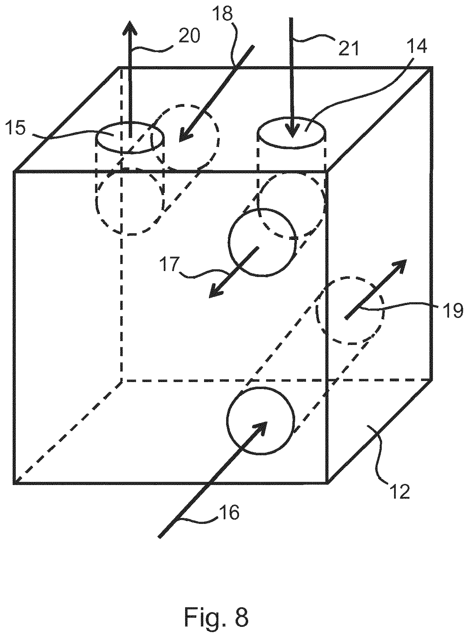

Figur 8 zeigt in einer der Figur 7 entsprechenden Darstellung einen Würfel zur Erläuterung der Strömungsverhältnisse in der Kopplungsplatte 12. Die dem Ladeluftkühler 5 entstammende trockene Luft tritt bei 16 in die Kopplungsplatte 12 ein, die von dieser trockenen Luft durchströmt wird und die Kopplungsplatte 12 am gegenüberliegenden Ende wieder verlässt zum Eintritt in den Befeuchter 6. Oberhalb der Trockenluftleitung 13 für die trockene Luft erfolgt bei 21 der Eintritt des Kühlmittels 21, das über den seitlichen Kühlmittelanschluss 14 aus der Kopplungsplatte 12 herausgeführt wird.

Die feuchte Luft aus dem Befeuchter 6 tritt bei 18 in die Kopplungsplatte 12 ein und kann diese über den seitlichen Luftaustritt 15 wieder verlassen.

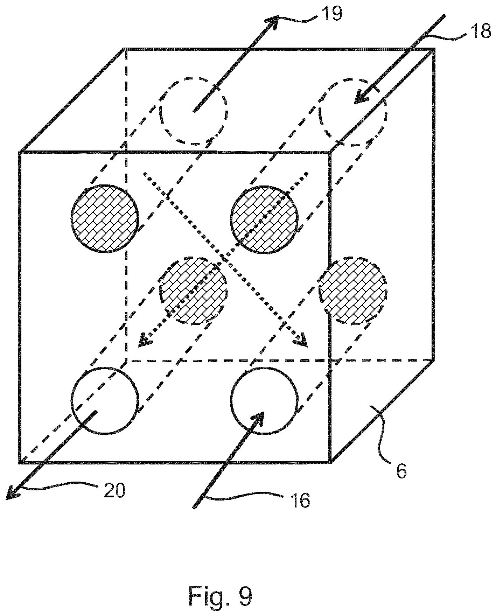

Figur 9 ist die den Figuren 7 und 8 entsprechende Darstellung zur Erläuterung der Strömungsverhältnisse in dem Befeuchter 6, wobei wiederum einseitig verschlossene Strömungskanäle vorliegen. Oben rechts tritt feuchte Luft 18 ein, die in einer Kreuzströmung nach unten links geführt wird, um dort den Befeuchter 6 wieder verlassen zu können 20. Trockene Luft tritt unten rechts ein 16, um gleichfalls in einer Kreuzströmung nach oben links 19 geführt zu werden und dann den dargestellten Würfel auf der rückseitigen Fläche verlassen zu können.

Es wird darauf hingewiesen, dass die entsprechenden Strömungskanäle in dem Befeuchter 6 und dem Ladeluftkühler 5 den Ecken 23 in den Flussfeldrahmen 8 bzw. Kühl-Flussfeldrahmen 10 entsprechen, aus denen die strömenden Medien in die Kanäle 24 der Flussfelder verteilt werden.

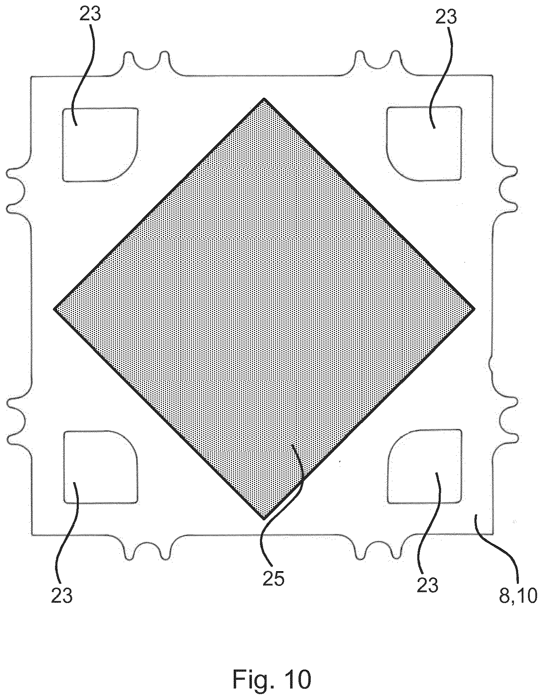

In Figur 10 ist ein Flussfeldrahmen 8 bzw. ein Kühl-Flussfeldrahmen 10 gezeigt, bei dem keine Kanäle 24 ausgebildet sind, sondern ein poröses Flussfeld 25 bereitgestellt ist. Die vorstehend geschilderten Strömungsverhältnisse sind dabei gleichbleibend. Ein derartiger Flussfeldrahmen 8 mit einem porösen Flussfeld 25 bietet die Möglichkeit, dass im Ladeluftkühler 6 die Porosität verringert werden kann, so dass eine größere Oberfläche für die Wärmeübertragung zur Verfügung steht. Alternativ kann auch zur Verringerung des Druckverlustes im Kühlmittel die Porosität im Befeuchterbereich vergrößert werden, wenn die damit verbundenen Vorteile eine Reduktion bei den Gleichteilen rechtfertigt.

Zu beachten ist weiterhin, dass in der Zeichnung selber nicht dargestellte Dichtungen auf beiden Seiten jeder Befeuchtermembran 9 angeordnet sind, wobei identisch gebildete Dichtungen auch auf beiden Seiten jeder Trennplatte 11 angeordnet sind, also auch bezüglich der Dichtungen Gleichteile vorliegen. Die zwischen den Kühl-Flussfeldrahmen 10 angeordneten Trennplatten 11 bestehen aus einem Metall oder einer Metalllegierung.

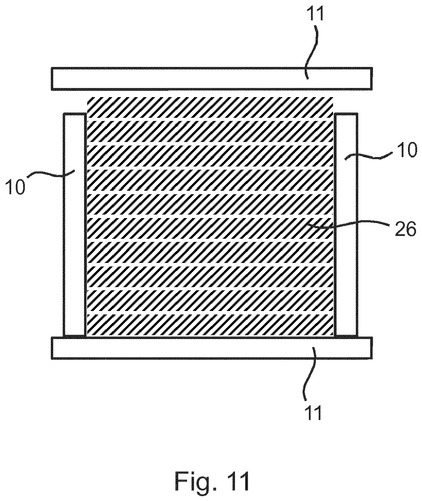

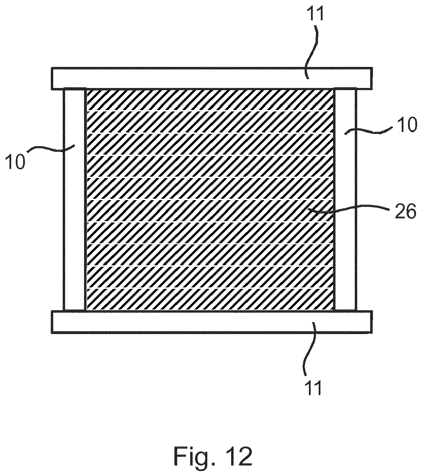

Die Figuren 11 und 12 verweisen darauf, dass zwischen den Trennplatten 11 in den Kühl-Flussfeldrahmen 10 für eine verbesserte Wärmeübertragung auch poröse Vliese 26 bereitgestellt werden können, die beim Zusammenbau verpresst werden zur Verbesserung der Kontaktfläche für den Wärmetransport.

### BEZUGSZEICHENLISTE:

- 1: Brennstoffzellenvorrichtung
- 2: Brennstoffzellenstapel
- 3: Verdichter
- 4: Kathodenzufuhrleitung
- 5: Ladeluftkühler
- 6: Befeuchter
- 7: Kathodenabgasleitung
- 8: Flussfeldrahmen
- 9: Befeuchtermembran
- 10: Kühl-Flussfeldrahmen
- 11: Trennplatte
- 12: Kopplungsplatte
- 13: Trockenluftleitung
- 14: Kühlmittelanschluss
- 15: Luftaustritt
- 16: Eintritt trockene Luft
- 17: Austritt Kühlmittel
- 18: Eintritt feuchte Luft
- 19: Austritt befeuchtete Luft
- 20: Austritt feuchte Luft
- 21: Eintritt Kühlmittel
- 22: Kühlmittelleitung
- 23: Ecken
- 24: Kanal
- 25: poröses Flussfeld
- 26: Vlies
- 27: Austritt trockene Luft

## Patentansprüche

1. Befeuchter (6) für eine Brennstoffzellenvorrichtung (1), mit einer Mehrzahl von Flussfeldrahmen (8), zwischen denen jeweils eine Befeuchtermembran (9) angeordnet ist, **dadurch gekennzeichnet, dass** eine Mehrzahl von zu den Flussfeldrahmen (8) identisch gebildete Kühl-Flussfeldrahmen (10), zwischen denen jeweils eine Trennplatte (11) angeordnet ist, einen integrierten Ladeluftkühler (5) bilden, und dass eine Kopplungsplatte (12) zwischen den in einem Stapel angeordneten Flussfeldrahmen (8) und den in einem Stapel angeordneten Kühl-Flussfeldrahmen (10) vorgesehen ist.

2. Befeuchter (6) nach Anspruch 1, **dadurch gekennzeichnet, dass** die Kopplungsplatte (12) flussfeldfrei mit dem zu den Flussfeldrahmen (8) identischen Querschnitt ausgebildet ist und eine durchgehende, die Flussfeldrahmen (8) und die Kühl-Flussfeldrahmen (10) für die trockene Luft koppelnde Trockenluftleitung (13) aufweist.

3. Befeuchter (6) nach Anspruch 2, **dadurch gekennzeichnet, dass** die Kopplungsplatte (12) einen seitlichen Kühlmittelanschluss (14) mit einer Kühlmittelleitung zur Durchleitung des Kühlmittels zu den Kühl-Flussfeldrahmen (10) aufweist.

4. Befeuchter (6) nach einem der Ansprüche 1 bis 3, **dadurch gekennzeichnet, dass** die Kopplungsplatte (12) einen seitlichen Luftaustritt (15) für den Austritt der feuchten Luft nach dem Durchleiten in einer Luftleitung von den Flussfeldrahmen (8) aufweist.

5. Befeuchter (6) nach einem der Ansprüche 1 bis 4, **dadurch gekennzeichnet, dass** auf beiden Seiten jeder Befeuchtermembran (9) eine Dichtung angeordnet ist, und dass identisch gebildete Dichtungen auf beiden Seiten jeder Trennplatte (11) angeordnet sind.

6. Befeuchter (6) nach einem der Ansprüche 1 bis 5, **dadurch gekennzeichnet, dass** die Trennplatte (11) aus einem Metall oder einer Metalllegierung gebildet ist.

7. Befeuchter (6) nach einem der Ansprüche 1 bis 6, **dadurch gekennzeichnet, dass** zwischen den Trennplatten (11) in den Kühl-Flussfeldrahmen (8) für eine verbesserte Wärmeübertragung Elemente zur Oberflächenvergrößerung angeordnet sind, die ausgewählt sind aus einer Gruppe, die Umlenkbleche, poröse Vliese (26) umfasst.

8. Befeuchter (6) nach einem der Ansprüche 1 bis 7, **dadurch gekennzeichnet, dass** in den Flussfeldrahmen (8) und den Kühl-Flussfeldrahmen (10) für das Flussfeld Kanäle (24) geformt oder poröse Flussfelder (25) bereit gestellt sind.

9. Kraftfahrzeug mit einer einen Befeuchter (6) nach einem der Ansprüche 1 bis 8 aufweisenden Brennstoffzellenvorrichtung (1).

## Claims

1. Humidifier (6) for a fuel cell device (1), with a plurality of flow field frames (8), between each of which a humidifier membrane (9) is arranged, **characterized in that** a plurality of cooling flow field frames (10) being identically formed to the flow field frames (8), between each of which a separating plate (11) is arranged, form an integrated charge air cooler (5), and **in that** a coupling plate (12) is provided between the flow field frames (8) arranged in a stack and the cooling flow field frames (10) arranged in a stack.

2. Humidifier (6) according to claim 1, **characterized in that** the coupling plate (12) is formed free of flow field with the cross-section identical to the flow field frames (8) and has a continuous dry air duct (13) coupling the flow field frames (8) and the cooling flow field frames (10) for the dry air.

3. Humidifier (6) according to claim 2, **characterized in that** the coupling plate (12) has a lateral coolant connection (14) with a coolant line for passing the coolant to the cooling flow field frames (10).

4. Humidifier (6) according to any one of claims 1 to 3, **characterized in that** the coupling plate (12) has a lateral air outlet (15) for the exit of the humid air after passing in an air duct from the flow field frames (8).

5. Humidifier (6) according to any of claims 1 to 4, **characterized in that** a seal is arranged on both sides of each humidifier membrane (9), and that identically formed seals are arranged on both sides of each separating plate (11).

6. Humidifier (6) according to one of claims 1 to 5, **characterized in that** the separating plate (11) is formed of a metal or a metal alloy.

7. Humidifier (6) according to one of the claims 1 to 6, **characterized in that** elements for surface enlargement are arranged between the separating plates (11) in the cooling flow field frames (8) for improved heat transfer, which are selected from a group comprising baffles, porous fleeces (26).

8. Humidifier (6) according to one of the claims 1 to 7, **characterized in that** ducts (24) are formed or porous flow fields (25) are provided in the flow field frame (8) and the cooling flow field frame (10) for the flow field.

9. Motor vehicle with a fuel cell device (1) having a humidifier (6) according to any one of claims 1 to 8.

## Revendications

1. Humidificateur (6) pour un dispositif à piles à combustible (1), avec une pluralité de cadres de champ d'écoulement (8), entre lesquels respectivement une membrane d'humidificateur (9) est disposée, **caractérisé en ce qu'**une pluralité de cadres de champ d'écoulement de refroidissement (10) formés de manière identique aux cadres de champ d'écoulement (8), entre lesquels respectivement une plaque de séparation (11) est disposée, forme un refroidisseur d'air de suralimentation intégré (5), et **en ce qu'**une plaque de couplage (12) est prévue entre les cadres de champ d'écoulement (8) disposés en une pile et les cadres de champ d'écoulement de refroidissement (10) disposés en une pile.

2. Humidificateur (6) selon la revendication 1, **caractérisé en ce que** la plaque de couplage (12) est conçue sans champ d'écoulement avec la section transversale identique aux cadres de champ d'écoulement (8) et présente une conduite d'air sec continue (13) couplant les cadres de champ d'écoulement (8) et les cadres de champ d'écoulement de refroidissement (10) pour l'air sec.

3. Humidificateur (6) selon la revendication 2, **caractérisé en ce que** la plaque de couplage (12) présente un raccord de liquide de refroidissement (14) avec une conduite de liquide de refroidissement pour l'acheminement du liquide de refroidissement vers les cadres de champ d'écoulement de refroidissement (10).

4. Humidificateur (6) selon l'une quelconque des revendications 1 à 3, **caractérisé en ce que** la plaque de couplage (12) présente une sortie d'air latérale (15) pour la sortie de l'air humide après le passage dans une conduite d'air des cadres de champ d'écoulement (8).

5. Humidificateur (6) selon l'une quelconque des revendications 1 à 4, **caractérisé en ce qu'**un joint est disposé sur les deux côtés de chaque membrane d'humidificateur (9), et **en ce que** des joints formés de manière identique sont disposés sur les deux côtés de chaque plaque de séparation (11).

6. Humidificateur (6) selon l'une quelconque des revendications 1 à 5, **caractérisé en ce que** la plaque de séparation (11) est formée d'un métal ou d'un alliage métallique.

7. Humidificateur (6) selon l'une quelconque des revendications 1 à 6, **caractérisé en ce que** des éléments pour l'agrandissement de la surface, qui sont sélectionnés parmi un groupe qui comprend des déflecteurs et des tissus non tissés poreux (26), sont disposés entre les plaques de séparation (11) dans les cadres de champ d'écoulement de refroidissement (8) pour l'amélioration de la transmission de chaleur.

8. Humidificateur (6) selon l'une quelconque des revendications 1 à 7, **caractérisé en ce que** des canaux (24) sont formés ou des champs d'écoulement poreux (25) sont prévus dans le cadre de champ d'écoulement (8) et le cadre de champ d'écoulement de refroidissement (10) pour le champ d'écoulement.

9. Véhicule automobile avec un dispositif à piles à combustible (1) présentant un humidificateur (6) selon l'une quelconque des revendications 1 à 8.
